# EUROPEAN PATENT SPECIFICATION

(11) **EP 4 454 965 B1**
(45) Date of publication and mention of the grant of the patent: **28.01.2026**
(21) Application number: 24171659.6
(22) Date of filing: 22.04.2024
(51) Int. Cl.: B60W 30/16, B60W 30/18, B60W 50/14

(54) **CONTROLLER AND CONTROL METHOD**
STEUERGERÄT UND STEUERUNGSVERFAHREN
CONTRÔLEUR ET PROCÉDÉ DE CONTRÔLE

(30) Priority: 25.04.2023 JP 2023071778
(43) Date of publication of application: 30.10.2024
(73) Proprietor: Robert Bosch GmbH, 70442 Stuttgart (DE)
(72) Inventor: Takii, Hiromasa, Yokohama-shi, Kanagawa, 2248501 (JP)

(56) References cited:
- EP-A1- 3 950 449
- DE-A1- 102010 041 620
- US-A1- 2011 196 592
- US-A1- 2018 126 990
- US-A1- 2018 178 713
- US-A1- 2018 345 991
- US-A1- 2019 299 855

## Description

### BACKGROUND OF THE INVENTION

### 1. Field of the Invention

The present invention relates to a controller and a control method capable of improving drivability of a motorcycle.

### 2. Description of the Background Art

Conventionally, various techniques for assisting with driving by a motorcycle rider have been proposed. For example, a driver-assistance system is disclosed in JP2009-116882A. The driver assistance system warns the motorcycle rider that the motorcycle inappropriately approaches an obstacle on the basis of information detected by a sensor device that detects the obstacle present in a travel direction or substantially in the travel direction. Furthermore, US 2011/196592 describes a method of operating an automatic speed control system to assist a driver of a vehicle during an overtaking or passing process. DE 10 2010 041620 describes a method and a device for assisting a driver in an overtaking process. US 2018/345991 describes a vehicle control system, a vehicle control method, and a storage medium capable of enabling an occupant to easily grasp a timing at which a behavior of a vehicle changes. US 2018/126990 describes a vehicle control system, a vehicle control method, and a vehicle control program in which an operation relating to travel assist can be easily performed.

By the way, positional relationship adjustment operation is available as a technique for assisting with driving of a vehicle. In the positional relationship adjustment operation, acceleration or deceleration is automatically generated to an own vehicle, and a positional relationship between the own vehicle and a preceding vehicle is thereby controlled to a target positional relationship. It is considered to apply the positional relationship adjustment operation to the motorcycle. Here, since body behavior of the motorcycle is more unstable and agile than a four-wheeled automobile and the like, it is particularly desired to improve drivability such that the behavior of the motorcycle becomes in line with the rider's intention.

### SUMMARY OF THE INVENTION

The invention has been made with the above-described problem as the background and therefore obtains a controller and a control method capable of improving drivability of a motorcycle.

A controller according to the invention is a controller that controls behavior of a motorcycle, and includes an execution section that executes positional relationship adjustment operation to control a positional relationship between the motorcycle and a preceding vehicle of the motorcycle to a target positional relationship by automatically generating acceleration or deceleration to the motorcycle. During execution of the positional relationship adjustment operation, the execution section executes: first control operation for enabling and suspending execution of positional relationship approaching operation in which the positional relationship between the motorcycle and the preceding vehicle is controlled to be closer than the target positional relationship; and second control operation for executing the positional relationship approaching operation when determining that a rider of the motorcycle has an intention to overtake the preceding vehicle while the positional relationship approaching operation is suspended. During the execution of the positional relationship adjustment operation, the execution section executes notification operation for notifying the rider of information on the positional relationship approaching operation. The execution section switches between enabling and disabling of the positional relationship approaching operation based on information which indicates that the motorcycle is traveling on a travel road which has a passing lane.

A control method according to the invention is a control method for controlling behavior of a motorcycle, and includes executing positional relationship adjustment operation by an execution section of a controller to control a positional relationship between the motorcycle and a preceding vehicle of the motorcycle to a target positional relationship by automatically generating acceleration or deceleration to the motorcycle. During execution of the positional relationship adjustment operation, the execution section executes: first control operation for enabling and suspending execution of positional relationship approaching operation in which the positional relationship between the motorcycle and the preceding vehicle is controlled to be closer than the target positional relationship; and second control operation for executing the positional relationship approaching operation when determining that a rider of the motorcycle has an intention to overtake the preceding vehicle while the positional relationship approaching operation is suspended. During the execution of the positional relationship adjustment operation, the execution section executes notification operation for notifying the rider of information on the positional relationship approaching operation. The execution section switches between enabling and disabling of the positional relationship approaching operation based on information which indicates that the motorcycle is traveling on a travel road which has a passing lane.

In the controller and the control method according to the invention, the execution section of the controller executes the positional relationship adjustment operation to control the positional relationship between the motorcycle and the preceding vehicle of the motorcycle to the target positional relationship by automatically generating the acceleration or the deceleration to the motorcycle. During the execution of the positional relationship adjustment operation, the execution section executes: the first control operation for enabling and suspending the execution of the positional relationship approaching operation in which the positional relationship between the motorcycle and the preceding vehicle is controlled to be closer than the target positional relationship; and the second control operation for executing the positional relationship approaching operation when determining that the rider of the motorcycle has the intention to overtake the preceding vehicle while the positional relationship approaching operation is suspended. During the execution of the positional relationship adjustment operation, the execution section executes the notification operation for notifying the rider of the information on the positional relationship approaching operation, the execution section (22) switches between enabling and disabling of the positional relationship approaching operation based on information which indicates that the motorcycle (1) is traveling on a travel road which has a passing lane. In this way, during the execution of the positional relationship adjustment operation, the rider can drive the motorcycle while grasping the information on the positional relationship approaching operation. Therefore, it is possible to improve drivability of the motorcycle.

### BRIEF DESCRIPTION OF THE DRAWINGS

Fig. 1 is a schematic view illustrating an outline configuration of a motorcycle according to an embodiment of the invention.
Fig. 2 is a block diagram illustrating an example of a functional configuration of a controller according to the embodiment of the invention.
Fig. 3 is a view illustrating a situation where the motorcycle according to the embodiment of the invention and a preceding vehicle are traveling.
Fig. 4 is a flowchart illustrating an example of a processing procedure that is executed by the controller according to the embodiment of the invention.
Fig. 5 is a view illustrating a display example of a case where positional relationship approaching operation according to the embodiment of the invention is disabled.
Fig. 6 is a view illustrating a display example of a case where the positional relationship approaching operation according to the embodiment of the invention is enabled and suspended.
Fig. 7 is a view illustrating a display example of a case where the positional relationship approaching operation according to the embodiment of the invention is being executed.

### DETAILED DESCRIPTION OF THE INVENTION

A description will hereinafter be made on a controller and a control method according to the invention with reference to the drawings.

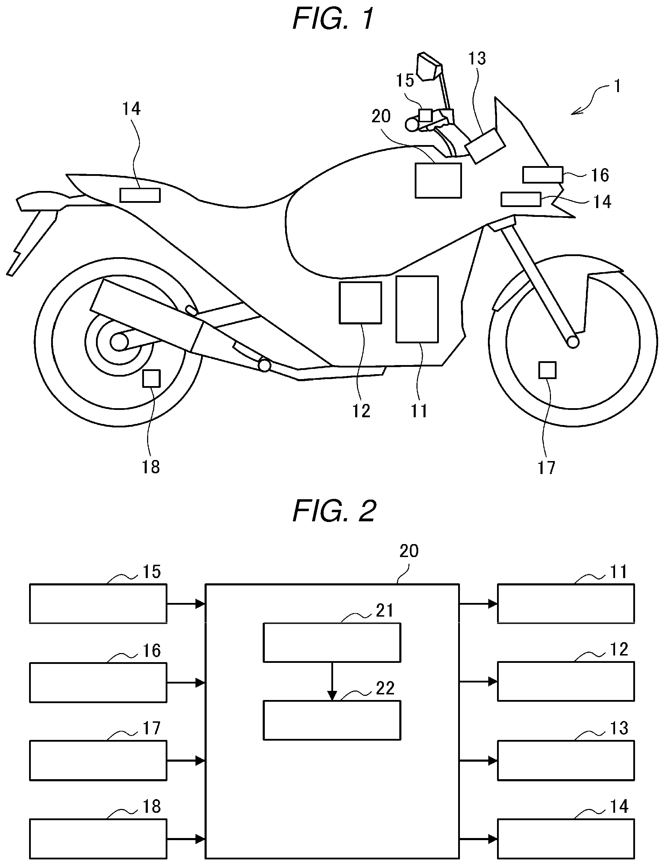

The following description will be made on a controller used for a two-wheeled motorcycle (see a motorcycle 1 in Fig. 1). However, a vehicle as a control target by the controller according to the invention may be a motorcycle other than the two-wheeled motorcycle. The motorcycles include a vehicle having an engine as a power source, a vehicle having an electric motor as the power source, and the like. Examples of the motorcycles include a motorbike, a scooter, and an electric scooter.

In addition, the following description will be made on a case where the engine (more specifically, an engine 11 in Fig. 1, which will be described below) is mounted as a drive source capable of outputting power for driving a drive wheel. However, as the drive source, a drive source other than the engine (for example, the electric motor) may be mounted, or a plurality of drive sources may be mounted.

Furthermore, the following description will be made on a case where a control unit (more specifically, a hydraulic pressure control unit 12 in Fig. 1, which will be described below) that controls a hydraulic pressure of a brake fluid is employed as a control unit for a braking force generated to a wheel. However, as the control unit for the braking force generated to the wheel, a control unit (a so-called brake-by-wire) that controls a position of a braking section itself for the wheel with an electric signal may be employed.

A configuration, operation, and the like, which will be described below, merely constitute one example.

The same or similar description will be simplified appropriately or will not be made below. In the drawings, the same or similar members or portions will not be denoted by a reference sign or will be denoted by the same reference sign. A detailed structure will appropriately be illustrated in a simplified manner or will not be illustrated.

### <Configuration of Motorcycle>

A description will be made on a configuration of the motorcycle 1 according to an embodiment of the invention with reference to Fig. 1 to Fig. 3.

Fig. 1 is a schematic view illustrating an outline configuration of the motorcycle 1. The motorcycle 1 is a two-wheeled motorcycle that corresponds to an example of the motorcycle according to the invention. As illustrated in Fig. 1, the motorcycle 1 includes the engine 11, the hydraulic pressure control unit 12, a display device 13, a direction indicator 14, an input device 15, a surrounding environment sensor 16, a front-wheel rotational frequency sensor 17, a rear-wheel rotational frequency sensor 18, and a controller (ECU) 20.

The engine 11 corresponds to an example of a drive source for the motorcycle 1 and can output power for driving a drive wheel (more specifically, a rear wheel). For example, the engine 11 is provided with: one or more cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount that is an opening amount of the throttle valve.

The hydraulic pressure control unit 12 is a unit that has a function of controlling a braking force generated to a wheel. For example, the hydraulic pressure control unit 12 has components (for example, a control valve and a pump) that are provided on an oil channel connecting a master cylinder and a wheel cylinder to control a brake hydraulic pressure in the wheel cylinder. The braking force generated to the wheel is controlled when operation of the components of the hydraulic pressure control unit 12 is controlled. The hydraulic pressure control unit 12 may separately control the braking force generated to a front wheel and the braking force generated to the rear wheel, or may only control the braking force generated to one of the front wheel and the rear wheel.

The display device 13 has a display function to visually display information to a rider. An example of the display device 13 is a liquid-crystal display. For example, the display device 13 is provided in front of a handlebar in the motorcycle **1.** However, arrangement of the display device 13 to a vehicle body is not particularly limited.

The direction indicator 14 includes pairs of right and left lamps provided to a front portion and a rear portion of the motorcycle 1. The direction indicator 14 notifies surrounding vehicles of an advancing direction of the motorcycle 1 when the motorcycle 1 makes a right or left turn or changes a lane. When the left direction indicator 14 is lit, the surrounding vehicles are notified that the motorcycle 1 soon makes the left turn or moves to a left lane. When the right direction indicator 14 is lit, the surrounding vehicles are notified that the motorcycle 1 soon makes the right turn or moves to a right lane.

The input device 15 accepts various operations by the rider. For example, the input device 15 is provided to the handlebar and includes a push button and the like used for the rider's operation. Information on the rider's operation using the input device 15 is output to the controller 20.

The surrounding environment sensor 16 detects surrounding environment information on surrounding environment of the motorcycle 1. More specifically, the surrounding environment sensor 16 is provided to the front portion of the motorcycle 1, and detects the surrounding environment information in front of the motorcycle 1. The surrounding environment information detected by the surrounding environment sensor 16 is output to the controller 20.

The surrounding environment information detected by the surrounding environment sensor 16 may be information on a distance to or an orientation of a target object that is located around the motorcycle 1 (for example, a relative position, a relative distance, a relative speed, relative acceleration, or the like), or may be a characteristic of the target object that is located around the motorcycle 1 (for example, a type of the target object, a shape of the target object itself, a mark on the target object, or the like). Examples of the surrounding environment sensor 16 include a radar, a Lidar sensor, an ultrasonic sensor, and a camera.

However, the surrounding environment information can also be detected by a surrounding environment sensor mounted to another vehicle or by an infrastructure facility. In other words, the controller 20 can also acquire the surrounding environment information via wireless communication with the other vehicle or the infrastructure facility.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The controller 20 controls behavior of the motorcycle 1. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into multiple units, for example.

As illustrated in Fig. 2, the controller 20 includes an acquisition section 21 and an execution section 22, for example. The controller 20 communicates with each of the devices (for example, the engine 11, the hydraulic pressure control unit 12, the display device 13, the direction indicator 14, the input device 15, the surrounding environment sensor 16, the front-wheel rotational frequency sensor 17, and the rear-wheel rotational frequency sensor 18) of the motorcycle 1. In addition, the controller 20 can control operation of each of the devices (for example, the engine 11, the hydraulic pressure control unit 12, the display device 13, and the direction indicator 14) of the motorcycle 1.

The acquisition section 21 acquires information from each of the devices in the motorcycle 1, and outputs the acquired information to the execution section 22. For example, the acquisition section 21 acquires information from the input device 15, the surrounding environment sensor 16, the front-wheel rotational frequency sensor 17, and the rear-wheel rotational frequency sensor 18. In the present specification, the acquisition of the information can include extraction, generation (for example, calculation), and the like of the information.

The execution section 22 executes various types of control by controlling operation of each of the devices in the motorcycle 1. For example, the execution section 22 controls operation of the engine 11, the hydraulic pressure control unit 12, the display device 13, and the direction indicator 14.

In particular, the execution section 22 can execute positional relationship adjustment operation. The positional relationship adjustment operation is operation to control a positional relationship between the motorcycle 1 and a preceding vehicle of the motorcycle 1 to a target positional relationship by automatically generating acceleration or deceleration to the motorcycle 1. In the positional relationship adjustment operation, the execution section 22 may control a positional relationship between the motorcycle 1 and a target other than the vehicle (for example, a traffic light or the like) to the target positional relationship.

Hereinafter, a description will be made on an example in which adaptive cruise control is executed as the positional relationship adjustment operation. However, the positional relationship adjustment operation only needs to be operation for controlling the positional relationship between the motorcycle 1 and the preceding vehicle to the target positional relationship, and may be operation other than the adaptive cruise control. For example, the positional relationship adjustment operation may be operation that is not canceled even with an accelerator operation by the rider and changes the target positional relationship according to an operation amount of the accelerator operation.

The execution section 22 initiates the adaptive cruise control with the rider's operation using the input device 15 as a trigger, for example. In the adaptive cruise control, the execution section 22 automatically controls a speed of the motorcycle 1 without relying on an accelerating/decelerating operation (that is, the accelerator operation and a brake operation) by the rider. The execution section 22 can control the speed of the motorcycle 1, for example, on the basis of information on the speed of the motorcycle 1 that is acquired on the basis of the rotational frequency of the front wheel and the rotational frequency of the rear wheel. In speed control for the motorcycle 1, for example, the execution section 22 can automatically generate the acceleration to the motorcycle 1 by controlling the operation of the engine 11, and can automatically generate the deceleration to the motorcycle 1 by controlling the operation of the hydraulic pressure control unit 12. The adaptive cruise control is canceled when the rider performs a particular operation such as the brake operation.

In the adaptive cruise control, for example, a target inter-vehicle distance is set as a target value of an inter-vehicle distance between the motorcycle 1 and the preceding vehicle, and the execution section 22 controls the speed of the motorcycle 1 such that the inter-vehicle distance between the motorcycle 1 and the preceding vehicle is maintained at the target inter-vehicle distance. In other words, such a positional relationship that the inter-vehicle distance between the motorcycle 1 and the preceding vehicle is the target inter-vehicle distance corresponds to the target positional relationship. Here, the inter-vehicle distance may mean a distance in a direction along a lane (more specifically, a travel lane of the motorcycle 1) or may mean a linear distance. For example, the acquisition section 21 acquires the inter-vehicle distance between the motorcycle 1 and the preceding vehicle on the basis of the surrounding environment information of the motorcycle 1. Then, based on the thus-acquired inter-vehicle distance, the execution section 22 can control the speed of the motorcycle 1 as described above.

However, in the adaptive cruise control, for example, a target passing time difference that is a target value of a passing time difference (more specifically, a time taken for the motorcycle 1 to pass a current location of the preceding vehicle from a current time point) may be set, and the execution section 22 may control the speed of the motorcycle 1 such that the passing time difference is maintained to be the target passing time difference. In this case, a positional relationship with which the passing time difference matches the target passing time difference corresponds to the target positional relationship. For example, the acquisition section 21 acquires the passing time difference on the basis of the surrounding environment information of the motorcycle 1. Then, based on the thus-acquired passing time difference, the execution section 22 can control the speed of the motorcycle 1 as described above.

In addition, the execution section 22 can execute positional relationship approaching operation during the positional relationship adjustment operation (for example, the adaptive cruise control). The positional relationship approaching operation is operation for controlling the positional relationship between the motorcycle 1 and the preceding vehicle to be closer than the target positional relationship, and is operation to assist the rider in overtaking the preceding vehicle. For example, in the positional relationship approaching operation, the execution section 22 controls the positional relationship between the motorcycle 1 and the preceding vehicle to be closer than the target positional relationship by increasing the acceleration of the motorcycle 1.

A case where the acceleration has a positive value corresponds to a case where the motorcycle 1 is being accelerated. A case where the acceleration has a negative value (that is, a case where the deceleration is generated) corresponds to a case where the motorcycle 1 is being decelerated. The increase in the acceleration of the motorcycle 1 includes: a reduction in an absolute value of the deceleration of the currently-decelerated motorcycle 1; shifting of the motorcycle 1 from a decelerated state to an accelerated state; and an increase in an absolute value of the acceleration of the currently-accelerated motorcycle 1.

However, the positional relationship approaching operation can also include such operation that the positional relationship between the motorcycle 1 and the preceding vehicle is controlled to be closer than the target positional relationship although the acceleration of the motorcycle 1 is not increased. For example, the following operation can also be included in the positional relationship approaching operation. In a situation where the motorcycle 1 and the preceding vehicle are being decelerated, operation is executed to control the positional relationship between the motorcycle 1 and the preceding vehicle to be closer than the target positional relationship as a result of controlling the absolute value of the deceleration of the motorcycle 1 to be smaller than an absolute value of deceleration of the preceding vehicle.

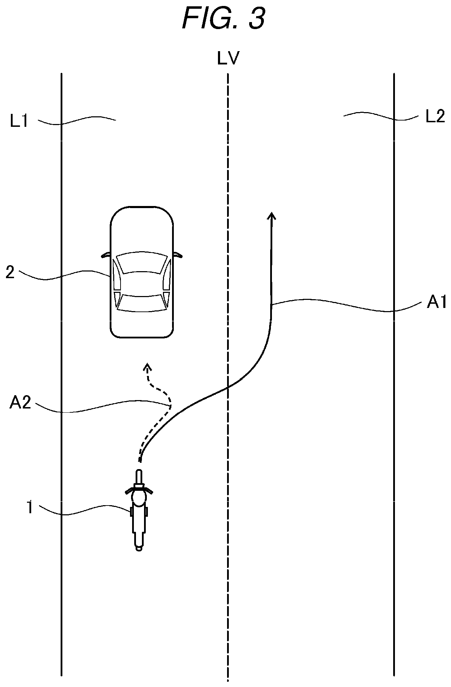

Fig. 3 is a view illustrating a situation where the motorcycle 1 and a preceding vehicle 2 are traveling. In an example illustrated in Fig. 3, a lane L1 and a lane L2 are adjacent to each other across a lane boundary LV. The motorcycle 1 and the preceding vehicle 2 are traveling in the lane L1. The preceding vehicle 2 is located in front of the motorcycle 1. The lane L2 is a passing lane. In the example illustrated in Fig. 3, the preceding vehicle 2 is a positional relationship adjustment target in the positional relationship adjustment operation (for example, the adaptive cruise control). In the example illustrated in Fig. 3, the preceding vehicle 2 is a four-wheeled automobile. However, the positional relationship adjustment target in the positional relationship adjustment operation may be a vehicle other than the four-wheeled automobile (for example, a motorcycle or the like).

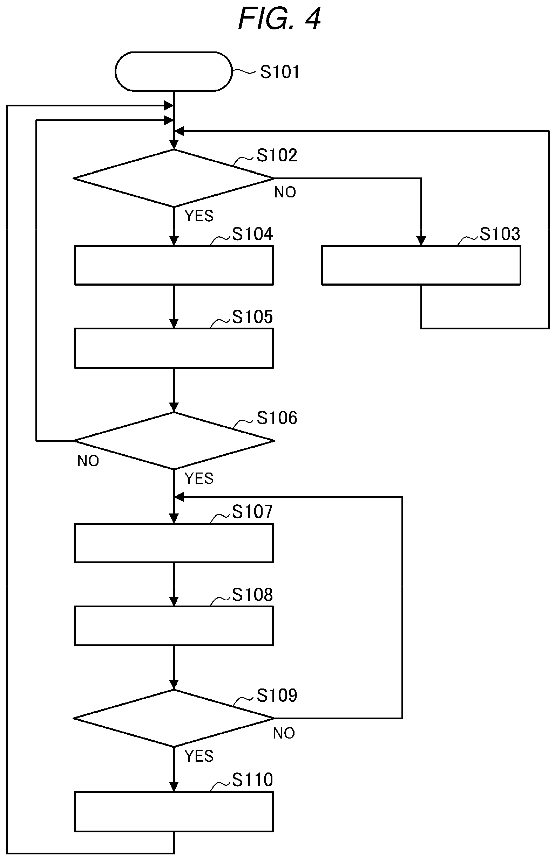

In the example illustrated in Fig. 3, the positional relationship approaching operation is executed in the case where it is determined that the rider of the motorcycle 1 has the intention to overtake the preceding vehicle 2 in a state where the execution of the positional relationship approaching operation is enabled (that is, a state where the execution of the positional relationship approaching operation is permitted). For example, when the direction indicator 14 on the passing lane side (the right direction indicator 14 in the example of Fig. 3) of the motorcycle 1 is actuated, or the like, it is determined that the rider has the intention to overtake the preceding vehicle 2. Consequently, the positional relationship approaching operation is executed, and the acceleration of the motorcycle 1 is increased. Thus, as indicated by a solid arrow A1, the rider can overtake the preceding vehicle 2. Details of processing for enabling or disabling the positional relationship approaching operation will be described below with reference to Fig. 4 and the like.

In the example illustrated in Fig. 3, even when the positional relationship approaching operation is executed, depending on a traffic condition in the lane L2, the rider may hesitate to overtake the preceding vehicle 2 and may not overtake the preceding vehicle 2. In this case, for example, as indicated by a broken arrow A2, the motorcycle 1 keeps traveling behind the preceding vehicle 2 and approaches the preceding vehicle 2. In such a case, a deceleration request for returning the positional relationship between the motorcycle 1 and the preceding vehicle to the target positional relationship takes priority over an acceleration request by the positional relationship approaching operation. Thus, the speed of the motorcycle 1 is controlled in response to the deceleration request. As a result, the positional relationship between motorcycle 1 and the preceding vehicle is adjusted back to the target positional relationship, and the positional relationship approaching operation is terminated.

### <Operation of Controller>

A description will be made on operation of the controller 20 according to the embodiment of the invention with reference to Fig. 4 to Fig. 7.

Fig. 4 is a flowchart illustrating an example of a processing procedure that is executed by the controller 20. A control flow illustrated in Fig. 4 is initiated when the adaptive cruise control is being executed. Step S101 in Fig. 4 corresponds to the initiation of the control flow illustrated in Fig. 4.

When the control flow illustrated in Fig. 4 is initiated, in step S102, the execution section 22 determines whether an enabling condition for the positional relationship approaching operation is satisfied.

In the adaptive cruise control, the positional relationship approaching operation is switched between being enabled and being disabled. A case where the positional relationship approaching operation is enabled means a state where the execution of the positional relationship approaching operation is enabled (that is, the execution of the positional relationship approaching operation is permitted). A case where the positional relationship approaching operation is disabled means a state where the execution of the positional relationship approaching operation is disabled (that is, the execution of the positional relationship approaching operation is prohibited).

The enabling condition for the positional relationship approaching operation is that all of the following first, second, third, fourth, and fifth conditions are satisfied, for example.

The first condition is that the speed of the motorcycle 1 is higher than a reference speed. For example, the reference speed is set to a speed with which it is possible to determine whether there is no traffic jam in the lane where the motorcycle 1 is traveling and vehicles are advancing smoothly. In the case where the speed of the motorcycle 1 is higher than the reference speed, it is possible to determine that the vehicles are advancing smoothly in the lane where the motorcycle 1 is traveling. The acquisition section 21 can acquire the speed of the motorcycle 1 on the basis of the rotational frequency of the front wheel and the rotational frequency of the rear wheel, for example.

The second condition is that presence of the preceding vehicle 2 (that is, the positional relationship adjustment target in the adaptive cruise control) has been detected. The execution section 22 can determine whether the presence of the preceding vehicle 2 has been detected on the basis of the surrounding environment information of the motorcycle 1, for example. The acquisition section 21 can acquire the surrounding environment information of the motorcycle 1 on the basis of the detection result by the surrounding environment sensor 16, for example.

The third condition according to the invention, is that a travel road on which the motorcycle 1 is traveling has a passing lane (the lane L2 in the example of Fig. 3). The execution section 22 can determine whether the travel road on which the motorcycle 1 is traveling has the passing lane, for example, on the basis of the surrounding environment information of the motorcycle 1. For example, the execution section 22 acquires information on travel positions of a plurality of other surrounding vehicles (more specifically, a relative position of each thereof to the motorcycle 1) on the basis of the surrounding environment information of the motorcycle 1. Then, based on this information, the execution section 22 can determine whether the travel road on which the motorcycle 1 is traveling has a plurality of the lanes. Consequently, when determining that the travel road on which the motorcycle 1 is traveling has the plurality of the lanes, the execution section 22 can determine that the passing lane is present.

The fourth condition is that the motorcycle 1 is traveling in the lane that is not the passing lane. The execution section 22 can determine whether the motorcycle 1 is traveling in the lane that is not the passing lane, for example, on the basis of the surrounding environment information of the motorcycle 1. For example, the execution section 22 acquires the information on the travel positions of the plurality of other surrounding vehicles (more specifically, the relative position of each thereof to the motorcycle 1) on the basis of the surrounding environment information of the motorcycle 1. Then, based on this information, the execution section 22 can determine whether the motorcycle 1 is traveling in the lane that is not the passing lane.

Here, in regard to the third condition and the fourth condition described above, whether the passing lane exists on a right side or a left side among the plurality of the lanes varies by country. Thus, the execution section 22 has to determine, in advance, whether the passing lane exists on the right side or the left side among the plurality of the lanes. For example, the execution section 22 acquires information on a surrounding traffic condition on the basis of the surrounding environment information of the motorcycle 1, and can make the above determination on the basis of this information.

The fifth condition is that, in the passing lane, there is no other vehicle whose absolute value of a relative speed to the motorcycle 1 is smaller than a reference value. For example, the reference value is set to a value with which it is possible to determine whether a collision possibility between the motorcycle 1 and the other vehicle exceeds a predetermined possibility when the motorcycle 1 changes the lane to the passing lane. In the case where there is the other vehicle, whose absolute value of the relative speed to the motorcycle 1 is smaller than the reference value, in the passing lane, it is possible to determine that the collision possibility between the motorcycle 1 and the other vehicle exceeds the predetermined possibility when the motorcycle 1 changes the lane to the passing lane.

The execution section 22 can determine whether there is the other vehicle, whose absolute value of the relative speed to the motorcycle 1 is smaller than the reference value, in the passing lane, for example, on the basis of the surrounding environment information of the motorcycle 1. For example, when determining that there is no other vehicle in the passing lane on the basis of the surrounding environment information of the motorcycle 1, the execution section 22 can determine that the fifth condition is satisfied. Meanwhile, for example, when determining that there is the other vehicle in the passing lane on the basis of the surrounding environment information of the motorcycle 1, the execution section 22 can determine whether the absolute value of the relative speed of the other vehicle to the motorcycle 1 is smaller than the reference value on the basis of the surrounding environment information of the motorcycle 1.

As will be described below, the execution section 22 switches between enabling and disabling of the positional relationship approaching operation, depending on whether the enabling condition for the positional relationship approaching operation is satisfied. Then, as described above, the execution section 22 determines whether the enabling condition for the positional relationship approaching operation is satisfied on the basis of various types of the information. That is, the execution section 22 switches between enabling and disabling of the positional relationship approaching operation on the basis of the various types of the information.

For example, as in the above example, the execution section 22 may switch between enabling and disabling of the positional relationship approaching operation on the basis of the surrounding environment information of the motorcycle 1. In the above example, the execution section 22 determines whether the second, third, fourth, and fifth conditions are satisfied on the basis of the surrounding environment information of the motorcycle 1. In this way, the positional relationship approaching operation is switched between being enabled and being disabled on the basis of the surrounding environment information of the motorcycle 1.

Alternatively, for example, the execution section 22 may switch between enabling and disabling of the positional relationship approaching operation on the basis of the travel state information of the motorcycle 1 as in the above example. The travel state information includes various types of information on a travel state of the motorcycle 1 and can include, for example, the speed, the acceleration, jerk, and the like of the motorcycle 1. In the above example, the execution section 22 determines whether the first condition is satisfied on the basis of the speed of the motorcycle 1. In this way, the positional relationship approaching operation is switched between being enabled and being disabled on the basis of the travel state information of the motorcycle 1. Here, the acquisition section 21 may estimate the travel state information of the motorcycle 1 on the basis of travel state information of the preceding vehicle 2. For example, the acquisition section 21 may take a speed of the preceding vehicle 2 as the speed of the motorcycle 1.

The above example is merely one example of the enabling condition for the positional relationship approaching operation. The enabling condition for the positional relationship approaching operation may be a condition set by making various modifications to the above example. For example, at least one arbitrary condition of the first, second, third, fourth, and fifth conditions may be eliminated from the above example. Alternatively, an additional condition (for example, a condition that it is possible to determine that the lane change can be made safely on the basis of information sent from a Global Positioning System (GPS) satellite, or the like) may be added to the above example.

If it is determined that the enabling condition for the positional relationship approaching operation is not satisfied (step S102/NO), the processing proceeds to step S103. In step S103, the execution section 22 disables the execution of the positional relationship approaching operation, and the processing returns to step S102.

On the other hand, if it is determined that the enabling condition for the positional relationship approaching operation is satisfied (step S102/YES), the processing proceeds to step S104. In step S104, the execution section 22 enables and suspends the execution of the positional relationship approaching operation. Hereafter, operation for enabling and suspending the execution of the positional relationship approaching operation will be referred to as first control operation.

Following step S104, in step S105, the execution section 22 executes notification operation for notifying the rider of the information on the positional relationship approaching operation. The notification operation executed in step S105 (that is, notification operation executed during execution of the first control operation) will also be referred to as first notification operation. Notification operation executed in step S108, which will be described below, will also be referred to as second notification operation. Just as described, the notification operation includes the first notification operation and the second notification operation.

Hereinafter, a description will be made on an example in which the execution section 22 executes the notification operation by using the display device 13 provided to the motorcycle 1. However, the notification in the notification operation is not limited to this example and can be made by any of various other methods.

For example, as in the above example using the display device 13, the notification in the notification operation may be made by means of display. The notification by display in the notification operation may be made by using the display device 13 mounted to the motorcycle 1, or may be made by using a display device mounted to a worn article (such as a helmet) by the rider.

Alternatively, for example, the notification in the notification operation may be made by sound. The notification by sound in the notification operation may be made by using a sound output device mounted to the motorcycle 1, or may be made by using a sound output device mounted to the worn article (such as the helmet) by the rider.

Further alternatively, for example, the notification in the notification operation may be made by vibration. The notification by vibration in the notification operation may be made by using a vibration generator mounted to the motorcycle 1, or may be made by using a vibration generator mounted to the worn article (such as the helmet) by the rider.

Further alternatively, for example, the notification in the notification operation may be made by generating instantaneous deceleration to the motorcycle 1. In this case, the instantaneous deceleration may be generated by using a control unit for the braking force generated to the wheel (for example, the hydraulic pressure control unit 12), by using the drive source of the motorcycle 1 (for example, the engine 11), or by using a transmission mechanism of the motorcycle 1.

The above description has been made on the examples of the various methods for making the notification in the notification operation. However, the notification in the notification operation may be made by combining any of the plural methods. For example, the notification in the notification operation may be made by display and sound.

For example, in the first notification operation, the execution section 22 notifies the rider of information indicating that the positional relationship approaching operation is enabled and suspended.

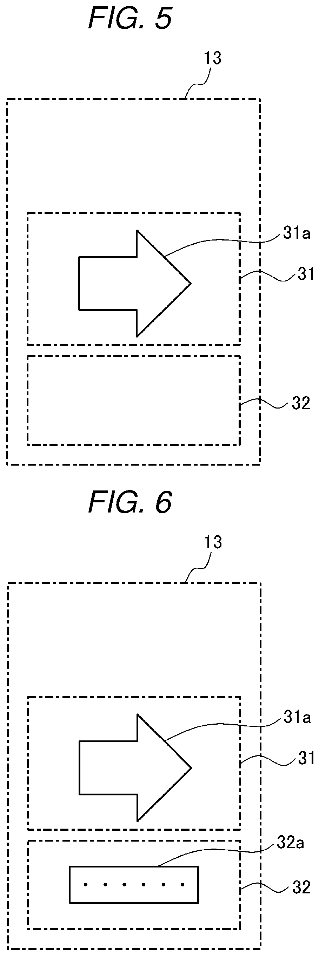

Fig. 5 is a view illustrating a display example of a case where the positional relationship approaching operation is disabled. The display example in Fig. 5 corresponds to a display example in a case where it is determined NO in step S102 and the positional relationship approaching operation is disabled in step S103.

In Fig. 5, only a part of the display device 13 is extracted. As illustrated in Fig. 5, the display device 13 has a display area 31 displaying an actuation state of the direction indicator 14 on the passing lane side of the motorcycle 1 (the right direction indicator 14 in the example of Fig. 5) and a display area 32 capable of displaying a text string. The display area 31 has a lamp 31a that is lit when the direction indicator 14 on the passing lane side is actuated.

In the display example of Fig. 5, since the direction indicator 14 on the passing lane side is not actuated, the lamp 31a in the display area 31 is unlit. In addition, no text string is displayed in the display area 32.

Fig. 6 is a view illustrating a display example of a case where the positional relationship approaching operation is enabled and suspended. The display example in Fig. 6 corresponds to a display example in a case where it is determined YES in step S102 and the first notification operation is executed in step S105.

In the display example of Fig. 6, since the direction indicator 14 on the passing lane side is not actuated as in the display example of Fig. 5, the lamp 31a in the display area 31 is unlit. Meanwhile, the display area 32 displays a text string 32a indicating that the positional relationship approaching operation is enabled and suspended.

In the above example, when the positional relationship approaching operation is enabled and suspended (that is, when the first control operation is executed), in the first notification operation, the execution section 22 notifies the rider of the information indicating that the positional relationship approaching operation is enabled and suspended by displaying the text string 32a. This allows the rider to recognize that the positional relationship approaching operation is enabled and suspended. On the other hand, when the positional relationship approaching operation is disabled, the text string 32a is not displayed, and the rider can thereby recognize that the positional relationship approaching operation is disabled.

In this way, it is possible to prevent the positional relationship approaching operation from being executed in conjunction with the operation of the direction indicator 14 in a state where the rider does not recognize that the positional relationship approaching operation is enabled. Thus, it is possible to suppress the rider from feeling uneasy due to the acceleration of the motorcycle 1 by the positional relationship approaching operation. In addition, when the rider desires to overtake the preceding vehicle 2, the rider can determine whether the positional relationship approaching operation can be used to overtake the preceding vehicle 2 or the rider himself/herself needs to perform the accelerator operation.

Following step S105 in Fig. 4, in step S106, the execution section 22 determines whether the direction indicator 14 on the passing lane side of the motorcycle 1 (the right direction indicator 14 in the example of Fig. 3) has been actuated.

The execution section 22 can determine whether the rider of the motorcycle 1 has the intention to overtake the preceding vehicle 2 on the basis of whether the direction indicator 14 on the passing lane side of the motorcycle 1 has been actuated. More specifically, in the case where the direction indicator 14 on the passing lane side is actuated, the execution section 22 determines that the rider has the intention to overtake the preceding vehicle 2. On the other hand, in the case where the direction indicator 14 on the passing lane side is not actuated, the execution section 22 determines that the rider has no intention to overtake the preceding vehicle 2.

The execution section 22 determines whether the direction indicator 14 on the passing lane side has been actuated on the basis of information on the operation of the direction indicator 14 by the rider. In this way, the execution section 22 can determine whether the rider has the intention to overtake the preceding vehicle 2. That is, the execution section 22 can determine presence or absence of the intention on the basis of the information on the operation of the direction indicator 14 by the rider.

Here, the execution section 22 may determine whether the rider has the intention to overtake the preceding vehicle 2 by a method other than the above. For example, the execution section 22 may determine whether the rider has the intention to overtake the preceding vehicle 2 on the basis of information on the rider's behavior (for example, behavior of a line of sight, or the like).

If it is determined that the direction indicator 14 on the passing lane side has not been actuated (step S106/NO), the processing returns to step S102. On the other hand, if it is determined that the direction indicator 14 on the passing lane side has been actuated (step S106/YES), the processing proceeds to step S107. If it is determined YES in step S106, the first notification operation is terminated.

If it is determined YES in step S106, in step S107, the execution section 22 executes the positional relationship approaching operation. Hereafter, operation for executing the positional relationship approaching operation will also be referred to as second control operation.

As described above, the positional relationship approaching operation is the operation for controlling the positional relationship between the motorcycle 1 and the preceding vehicle 2 to be closer than the target positional relationship and thereby assisting the rider in overtaking the preceding vehicle 2. For example, in the positional relationship approaching operation, the execution section 22 controls the positional relationship between the motorcycle 1 and the preceding vehicle 2 to be closer than the target positional relationship by increasing the acceleration of the motorcycle 1.

For example, in the positional relationship approaching operation, the execution section 22 controls the engine 11 such that requested acceleration is generated to the motorcycle 1. The requested acceleration in the positional relationship approaching operation is basically a set value that is set in advance. However, in the case where the speed of the motorcycle 1 falls within a range near the reference speed in the first condition of the enabling condition for the positional relationship approaching operation described above, the execution section 22 may reduce the requested acceleration in the positional relationship approaching operation to be lower than the set value.

Following step S107, in step S108, the execution section 22 executes the notification operation for notifying the rider of the information on the positional relationship approaching operation. The notification operation executed in step S108 (that is, the notification operation executed during execution of the second control operation) will also be referred to as second notification operation.

Hereinafter, a description will be made on an example in which the execution section 22 executes the second notification operation by using the display device 13 provided to the motorcycle 1. However, as described above, the second notification operation may be executed by another method.

For example, in the second notification operation, the execution section 22 notifies the rider of information indicating that the positional relationship approaching operation is enabled and being executed.

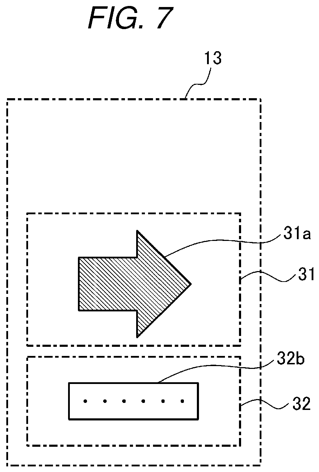

Fig. 7 is a view illustrating a display example of a case where the positional relationship approaching operation is being executed. The display example in Fig. 7 corresponds to a display example in a case where it is determined YES in step S106 and the second notification operation is executed in step S108.

In the display example of Fig. 7, since the direction indicator 14 on the passing lane side is actuated, the lamp 31a in the display area 31 is lit. In addition, the display area 32 displays a text string 32b indicating that the positional relationship approaching operation is enabled and being executed.

In the above example, when the positional relationship approaching operation is enabled and being executed (that is, when the second control operation is executed), in the second notification operation, the execution section 22 notifies the rider of the information indicating that the positional relationship approaching operation is enabled and being executed by displaying the text string 32b. This allows the rider to recognize that the positional relationship approaching operation is enabled and being executed. In this way, it is possible to prevent the positional relationship approaching operation from being executed in conjunction with the operation of the direction indicator 14 in the state where the rider is unaware of enabling of the positional relationship approaching operation. Thus, it is possible to suppress the rider from feeling uneasy due to the acceleration of the motorcycle 1 by the positional relationship approaching operation.

After step S108 in Fig. 4, in step S109, the execution section 22 determines whether a termination condition for the positional relationship approaching operation is satisfied.

As will be described below, the positional relationship approaching operation is disabled and terminated when the termination condition in step S109 is satisfied. That is, the termination condition in step S109 is a condition for terminating the positional relationship approaching operation. When the termination condition in step S109 is satisfied, the second notification operation is terminated in conjunction with the termination of the positional relationship approaching operation.

For example, the termination condition of the positional relationship approaching operation is completion of the lane change by the motorcycle 1. For example, when determining that the motorcycle 1 has completed moving into the passing lane on the basis of travel position information in the travel road of the motorcycle 1, the execution section 22 can determine the completion of the lane change by the motorcycle 1. Here, the acquisition section 21 can acquire the travel position information in the travel road of the motorcycle 1 on the basis of the detection result by the surrounding environment sensor 16, for example.

When the positional relationship approaching operation is terminated in conjunction with the completion of the lane change by the motorcycle 1, the second notification operation is terminated. Just as described, the execution section 22 may determine whether to continue the notification operation on the basis of information on the lane change by the motorcycle 1. However, the information on the lane change by the motorcycle 1 can be any of various types of the information on the lane change by the motorcycle 1, and may be information other than the travel position information described above. For example, when the presence of the preceding vehicle 2 is no longer detected, the execution section 22 may determine the completion of the lane change by the motorcycle 1. In this case, information on presence or absence of the detection of the presence of the preceding vehicle 2 corresponds to the information on the lane change by the motorcycle 1.

Alternatively, for example, the termination condition of the positional relationship approaching operation is that a reference time has elapsed since the initiation of the positional relationship approaching operation. For example, the reference time can be set longer than a time assumed to be required for the lane change by the motorcycle 1. The completion of the lane change by the motorcycle 1 is assumed in the case where the reference time has elapsed since the initiation of the positional relationship approaching operation. Here, as indicated by the broken arrow A2 in Fig. 3, in the case where the rider hesitates to overtake the preceding vehicle 2 and does not overtake the preceding vehicle 2, the lane change by the motorcycle 1 is not completed when the reference time has elapsed since the initiation of the positional relationship approaching operation. However, the positional relationship approaching operation is terminated.

When the positional relationship approaching operation is terminated with the lapse of the time, the second notification operation is terminated. Just as described, the execution section 22 may determine whether to continue the notification operation on the basis of time information. However, the time information may be any of various types of information on time, and may be information other than the information on the elapsed time since the initiation of the positional relationship approaching operation. For example, the execution section 22 may determine whether to continue the notification operation on the basis of information on an elapsed time since the acceleration of the motorcycle 1 reaches the requested acceleration for the positional relationship approaching operation.

Here, the termination condition of the positional relationship approaching operation may be that the enabling condition for the positional relationship approaching operation in step S102 is no longer satisfied. For example, when any one of the first, second, third, fourth, and fifth conditions included in the enabling condition for the positional relationship approaching operation in step S102 is no longer satisfied, the execution section 22 may determine that the termination condition of the positional relationship approaching operation is satisfied. In this case, as will be described below, the positional relationship approaching operation is disabled and terminated. Just as described, similar to the enabling condition for the positional relationship approaching operation in step S102, the termination condition of the positional relationship approaching operation corresponds to the condition for switching between enabling and disabling of the positional relationship approaching operation. Thus, for example, it can be said that the execution section 22 may switch between enabling and disabling of the positional relationship approaching operation on the basis of the information on the lane change by the motorcycle 1 or the time information.

The above description has been made on the examples of the termination condition of the positional relationship approaching operation. However, the termination condition of the positional relationship approaching operation may be other than the above examples. In addition, the termination condition of the positional relationship approaching operation may include plural types of conditions. For example, the termination condition of the positional relationship approaching operation may be that any one of the plural types of the conditions appropriately selected from the above examples is satisfied.

Following step S109, in step S110, the execution section 22 disables the execution of the positional relationship approaching operation and terminates the positional relationship approaching operation, and the processing returns to step S102.

The above description has been made on the processing example executed by the controller 20 with reference to the flowchart in Fig. 4. However, the processing executed by the controller 20 may be processing that is acquired by modifying the processing example described above.

For example, in the above example, in the notification operation, the rider is notified of the information indicating that the positional relationship approaching operation is enabled (more specifically, the text string 32a or the text string 32b). That is, in the notification operation, the rider is notified that the positional relationship approaching operation is enabled. However, in the notification operation, the execution section 22 may notify the rider that the positional relationship approaching operation is disabled. For example, when the execution of the positional relationship approaching operation is disabled, the execution section 22 may notify the rider information indicating that the positional relationship approaching operation is disabled by displaying a text string indicating that the positional relationship approaching operation is disabled. Alternatively, in the notification operation, the execution section 22 may notify the rider of both enabling and disabling of the positional relationship approaching operation. That is, in the notification operation, the execution section 22 may notify the rider of at least either of enabling and disabling of the positional relationship approaching operation.

In the above example, whether the notification operation is executed varies according to whether the positional relationship approaching operation is enabled. However, the execution section 22 may vary at least one of the content and the mode of the notification to the rider in the notification operation according to whether the positional relationship approaching operation is enabled. For example, the execution section 22 may display the text string indicating that the positional relationship approaching operation is enabled when the positional relationship approaching operation is enabled, and may display the text string indicating that the positional relationship approaching operation is disabled when the positional relationship approaching operation is disabled. Alternatively, for example, the execution section 22 may change a color, a size, brightness, or the like of a displayed object such as the displayed text string between the case where the positional relationship approaching operation is enabled and the case where the positional relationship approaching operation is disabled.

Here, as described above, the execution section 22 may switch between enabling and disabling of the positional relationship approaching operation on the basis of the surrounding environment information of the motorcycle 1, the travel state information of the motorcycle 1, or the time information. That is, the execution section 22 may change at least one of the content and the mode of the notification to the rider in the notification operation on the basis of the surrounding environment information of the motorcycle 1, the travel state information of the motorcycle 1, or the time information.

Furthermore, for example, in the notification operation, the execution section 22 may notify the rider of the mode of the positional relationship approaching operation. For example, as the mode of the positional relationship approaching operation, the execution section 22 may notify the rider of information on a control parameter for the positional relationship approaching operation. The control parameters for the positional relationship approaching operation include various parameters used for the control of the positional relationship approaching operation and can include the requested acceleration and the like in the positional relationship approaching operation, for example. The information on the control parameter can include a value itself of the control parameter, rough information indicating a magnitude of the value of the control parameter stepwise, or the like.

For example, during the execution of the first control operation, the execution section 22 may notify the rider of the mode of the positional relationship approaching operation in the first notification operation. For example, during the execution of the second control operation, the execution section 22 may notify the rider of the mode of the positional relationship approaching operation in the second notification operation. In the notification operation, the execution section 22 may notify the rider of the mode of the positional relationship approaching operation instead of or in addition to the notification of at least either of enabling and disabling of the positional relationship approaching operation to the rider.

In the above example, the first notification operation is executed during the execution of the first control operation, and the second notification operation is executed during the execution of the second control operation. That is, the notification operation is executed during the execution of both of the first control operation and the second control operation. However, the execution section 22 may execute only one of the first notification operation and the second notification operation. That is, the notification operation may be executed during the execution of only one of the first control operation or the second control operation.

A case where the adaptive cruise control is canceled during the execution of the control flow illustrated in Fig. 4 is not described above. In the case where the adaptive cruise control is canceled during the execution of the control flow illustrated in Fig. 4, the control flow illustrated in Fig. 4 is terminated in conjunction with cancellation of the adaptive cruise control. Here, in the case where the adaptive cruise control is canceled in the situation where the notification operation is executed, the execution section 22 terminates the notification operation.

### <Effects of Controller>

A description will be made on effects of the controller 20 according to the embodiment of the invention.

The controller 20 includes the execution section 22 that executes the positional relationship adjustment operation (in the above example, the adaptive cruise control) to control the positional relationship between the motorcycle 1 and the preceding vehicle 2 to the target positional relationship by automatically generating the acceleration or the deceleration to the motorcycle 1. During the execution of the positional relationship adjustment operation, the execution section 22 executes: the first control operation for enabling and suspending the execution of the positional relationship approaching operation in which the positional relationship between the motorcycle 1 and the preceding vehicle 2 is controlled to be closer than the target positional relationship; and the second control operation for executing the positional relationship approaching operation when determining that the rider of the motorcycle 1 has the intention to overtake the preceding vehicle 2 while the positional relationship approaching operation is suspended. Then, during the execution of the positional relationship adjustment operation, the execution section 22 executes the notification operation for notifying the rider of the information on the positional relationship approaching operation. In this way, during the execution of the positional relationship adjustment operation, the rider can drive the motorcycle 1 while grasping the information on the positional relationship approaching operation. Therefore, it is possible to improve drivability of the motorcycle 1.

Preferably, in the notification operation, the execution section 22 of the controller 20 notifies the rider of at least either of enabling and disabling of the positional relationship approaching operation. In this way, it is possible to prevent the positional relationship approaching operation from being executed in the state where the rider is unaware of enabling of the positional relationship approaching operation. Thus, it is possible to suppress the rider from feeling uneasy due to the acceleration of the motorcycle 1 by the positional relationship approaching operation. In addition, when the rider desires to overtake the preceding vehicle 2, the rider can determine whether the positional relationship approaching operation can be used to overtake the preceding vehicle 2 or the rider himself/herself needs to perform the accelerator operation. Therefore, it is possible to reliably improve the drivability of the motorcycle 1.

Preferably, in the notification operation, the execution section 22 of the controller 20 notifies the rider of the mode of the positional relationship approaching operation. In this way, the rider can drive the motorcycle 1 while grasping in which mode the positional relationship approaching operation is executed. Thus, it is possible to suppress the rider from feeling uneasy due to the acceleration of the motorcycle 1 by the positional relationship approaching operation. In addition, when the rider desires to overtake the preceding vehicle 2, the rider can determine whether to use the positional relationship approaching operation in consideration of the mode of the positional relationship approaching operation. Therefore, it is possible to reliably improve the drivability of the motorcycle 1.

Preferably, during the execution of the first control operation, the execution section 22 of the controller 20 executes the notification operation. In this way, during the execution of the first control operation, which is executed before the positional relationship approaching operation, the rider can drive the motorcycle 1 while grasping the information on the positional relationship approaching operation (for example, the information on whether the positional relationship approaching operation is enabled and suspended or the mode of the positional relationship approaching operation). Therefore, it is possible to reliably improve the drivability of the motorcycle 1.

Preferably, during the execution of the second control operation, the execution section 22 of the controller 20 executes the notification operation. In this way, during the execution of the second control operation, which is executed during the execution of the positional relationship approaching operation, the rider can drive the motorcycle 1 while grasping the information on the positional relationship approaching operation (for example, the information on whether the positional relationship approaching operation is enabled and executed or the mode of the positional relationship approaching operation). Therefore, it is possible to reliably improve the drivability of the motorcycle **1.**

Preferably, the execution section 22 of the controller 20 determines the presence or the absence of the rider's intention to overtake the preceding vehicle 2 on the basis of the information on the operation of the direction indicator 14 of the motorcycle 1 by the rider. In this way, it is possible to appropriately determine whether the rider has the intention to overtake the preceding vehicle **2.**

Preferably, the execution section 22 of the controller 20 switches between enabling and disabling of the positional relationship approaching operation on the basis of the surrounding environment information of the motorcycle **1. In** this way, it is possible to switch between enabling and disabling of the positional relationship approaching operation after it is determined whether the preceding vehicle 2 can be overtaken safely on the basis of the surrounding environment information of the motorcycle **1.**

Preferably, the execution section 22 of the controller 20 switches between enabling and disabling of the positional relationship approaching operation on the basis of the travel state information of the motorcycle **1.** In this way, it is possible to switch between enabling and disabling of the positional relationship approaching operation after it is determined whether the preceding vehicle 2 can be overtaken safely on the basis of the travel state information of the motorcycle 1.

Preferably, the execution section 22 of the controller 20 switches between enabling and disabling of the positional relationship approaching operation on the basis of the time information. In this way, it is possible to switch between enabling and disabling of the positional relationship approaching operation without using the other type of the information such as the surrounding environment information of the motorcycle 1. For example, when the reference time has elapsed since the initiation of the positional relationship approaching operation, the positional relationship approaching operation can be terminated without using the other type of the information such as the surrounding environment information of the motorcycle 1.

Preferably, the execution section 22 of the controller 20 changes at least one of the content and the mode of the notification to the rider in the notification operation on the basis of the surrounding environment information of the motorcycle 1. In this way, when the positional relationship approaching operation is switched between being enabled and being disabled on the basis of the surrounding environment information of the motorcycle 1, the rider can recognize the switching between enabling and disabling of the positional relationship approaching operation.

Preferably, the execution section 22 of the controller 20 changes at least one of the content and the mode of the notification to the rider in the notification operation on the basis of the travel state information of the motorcycle **1.** In this way, when the positional relationship approaching operation is switched between being enabled and being disabled on the basis of the travel state information of the motorcycle 1, the rider can recognize the switching between enabling and disabling of the positional relationship approaching operation.

Preferably, the execution section 22 of the controller 20 changes at least one of the content and the mode of the notification to the rider in the notification operation on the basis of the time information. In this way, when the positional relationship approaching operation is switched between being enabled and being disabled on the basis of the time information, the rider can recognize the switching between enabling and disabling of the positional relationship approaching operation.

Preferably, the execution section 22 of the controller 20 determines whether to continue the notification operation on the basis of the information on the lane change by the motorcycle **1.** In this way, when the positional relationship approaching operation is terminated in conjunction with the completion of the lane change by the motorcycle 1, the notification operation can be terminated.

Preferably, the execution section 22 of the controller 20 determines whether to continue the notification operation on the basis of the time information. In this way, when the positional relationship approaching operation is terminated in conjunction with the lapse of the time, the notification operation can be terminated.

## Claims

1. A controller (20) that controls behavior of a motorcycle (1), the controller comprising:
an execution section (22) that executes positional relationship adjustment operation to control a positional relationship between the motorcycle (1) and a preceding vehicle (2) of the motorcycle (1) to a target positional relationship by automatically generating acceleration or deceleration to the motorcycle (1), wherein
during execution of the positional relationship adjustment operation, the execution section (22) executes:
first control operation for enabling and suspending execution of positional relationship approaching operation in which the positional relationship between the motorcycle (1) and the preceding vehicle (2) is controlled to be closer than the target positional relationship; and
second control operation for executing the positional relationship approaching operation when determining that a rider of the motorcycle (1) has an intention to overtake the preceding vehicle (2) while the positional relationship approaching operation is suspended, and
during the execution of the positional relationship adjustment operation, the execution section (22) executes notification operation for notifying the rider of information on the positional relationship approaching operation, **characterized in that**,
the execution section (22) switches between enabling and disabling of the positional relationship approaching operation based on information which indicates that the motorcycle (1) is traveling on a travel road which has a passing lane.

2. The controller according to claim 1, wherein
in the notification operation, the execution section (22) notifies the rider of at least either of enabling and disabling of the positional relationship approaching operation.

3. The controller according to claim 1, wherein
in the notification operation, the execution section (22) notifies the rider of a mode of the positional relationship approaching operation.

4. The controller according to any one of claims 1 to 3, wherein
during execution of the first control operation, the execution section (22) executes the notification operation.

5. The controller according to any one of claims 1 to 3, wherein
during execution of the second control operation, the execution section (22) executes the notification operation.

6. The controller according to any one of claims 1 to 3, wherein
the execution section (22) determines presence or absence of the intention on the basis of information on an operation of a direction indicator (14) of the motorcycle (1) by the rider.

7. The controller according to any one of claims 1 to 3, wherein
the execution section (22) switches between enabling and disabling of the positional relationship approaching operation on the basis of surrounding environment information of the motorcycle (1).

8. The controller according to any one of claims 1 to 3, wherein
the execution section (22) switches between enabling and disabling of the positional relationship approaching operation on the basis of travel state information of the motorcycle (1).

9. The controller according to any one of claims 1 to 3, wherein
the execution section (22) switches between enabling and disabling of the positional relationship approaching operation on the basis of time information.

10. The controller according to any one of claims 1 to 3, wherein
the execution section (22) changes at least one of a content and a mode of notification to the rider in the notification operation on the basis of surrounding environment information of the motorcycle (1).

11. The controller according to any one of claims 1 to 3, wherein
the execution section (22) changes at least one of a content and a mode of notification to the rider in the notification operation on the basis of travel state information of the motorcycle (1).

12. The controller according to any one of claims 1 to 3, wherein
the execution section (22) changes at least one of a content and a mode of notification to the rider in the notification operation on the basis of time information.

13. The controller according to any one of claims 1 to 3, wherein
the execution section (22) determines whether to continue the notification operation on the basis of information on a lane change by the motorcycle (1).

14. The controller according to any one of claims 1 to 3, wherein
the execution section (22) determines whether to continue the notification operation on the basis of time information.

15. A control method for controlling behavior of a motorcycle (1), the control method comprising:
executing positional relationship adjustment operation by an execution section (22) of a controller (20) to control a positional relationship between the motorcycle (1) and a preceding vehicle (2) of the motorcycle (1) to a target positional relationship by automatically generating acceleration or deceleration to the motorcycle (1), wherein
during execution of the positional relationship adjustment operation, the execution section (22) executes:
first control operation for enabling and suspending execution of positional relationship approaching operation in which the positional relationship between the motorcycle (1) and the preceding vehicle (2) is controlled to be closer than the target positional relationship; and
second control operation for executing the positional relationship approaching operation when determining that a rider of the motorcycle (1) has an intention to overtake the preceding vehicle while the positional relationship approaching operation is suspended, and
during the execution of the positional relationship adjustment operation, the execution section (22) executes notification operation for notifying the rider of information on the positional relationship approaching operation, **characterized in that**
the execution section (22) switches between enabling and disabling of the positional relationship approaching operation based on information which indicates that the motorcycle (1) is traveling on a travel road which has a passing lane.

## Patentansprüche

1. Steuergerät (20), das ein Verhalten eines Motorrads (1) steuert, wobei das Steuergerät Folgendes umfasst:
einen Ausführungsabschnitt (22), der eine Positionsbeziehungsanpassungsoperation ausführt, um durch automatisches Erzeugen einer Beschleunigung oder Verzögerung des Motorrads (1) eine Positionsbeziehung zwischen dem Motorrad (1) und einem vorausfahrenden Fahrzeug (2) des Motorrads (1) auf eine Zielpositionsbeziehung zu steuern, wobei während der Ausführung der Positionsbeziehungsanpassungsoperation, der Ausführungsabschnitt (22) Folgendes ausführt:
eine erste Steueroperation zum Aktivieren und Aussetzen der Ausführung einer Positionsbeziehungsannäherungsoperation, bei der die Positionsbeziehung zwischen dem Motorrad (1) und dem vorausfahrenden Fahrzeug (2) so gesteuert wird, dass sie näher als die Zielpositionsbeziehung ist; und
eine zweite Steueroperation zum Ausführen der Positionsbeziehungsannäherungsoperation, wenn bestimmt wird, dass ein Fahrer des Motorrads (1) beabsichtigt,
das vorausfahrende Fahrzeug (2) zu überholen, während die Positionsbeziehungsannäherungsoperation ausgesetzt ist, und
während der Ausführung der Positionsbeziehungsanpassungsoperation, der Ausführungsabschnitt (22) eine Benachrichtigungsoperation zum Benachrichtigen des Fahrers über Informationen über die Positionsbeziehungsannäherungsoperation ausführt,
**dadurch gekennzeichnet, dass**,
der Ausführungsabschnitt (22) zwischen dem Aktivieren und Deaktivieren der Positionsbeziehungsannäherungsoperation umschaltet,
basierend auf Informationen, die angeben, dass das Motorrad (1) auf einer Fahrbahn fährt, die eine Überholspur aufweist.

2. Steuergerät nach Anspruch 1, wobei
bei der Benachrichtigungsoperation, der Ausführungsabschnitt (22) den Fahrer über das Aktivieren und/oder Deaktivieren der Positionsbeziehungsannäherungsoperation benachrichtigt.

3. Steuergerät nach Anspruch 1, wobei
bei der Benachrichtigungsoperation, der Ausführungsabschnitt (22) den Fahrer über einen Modus der Positionsbeziehungsannäherungsoperation benachrichtigt.

4. Steuergerät nach einem der Ansprüche 1 bis 3,
wobei
während der Ausführung der ersten Steueroperation, der Ausführungsabschnitt (22) die Benachrichtigungsoperation ausführt.

5. Steuergerät nach einem der Ansprüche 1 bis 3,
wobei
während der Ausführung der zweiten Steueroperation, der Ausführungsabschnitt (22) die Benachrichtigungsoperation ausführt.

6. Steuergerät nach einem der Ansprüche 1 bis
3, wobei
der Ausführungsabschnitt (22) das Vorhandensein oder Nichtvorhandensein der Absicht auf Grundlage von Informationen über eine Betätigung eines Fahrtrichtungsanzeigers (14) des Motorrads (1) durch den Fahrer bestimmt.

7. Steuergerät nach einem der Ansprüche 1 bis 3,
wobei
der Ausführungsabschnitt (22) zwischen dem Aktivieren und Deaktivieren der Positionsbeziehungsannäherungsoperation auf Grundlage von Umgebungsinformationen des Motorrads (1) umschaltet.

8. Steuergerät nach einem der Ansprüche 1 bis 3,
wobei
der Ausführungsabschnitt (22) zwischen dem Aktivieren und Deaktivieren der Positionsbeziehungsannäherungsoperation auf Grundlage von Fahrzustandsinformationen des Motorrads (1) umschaltet.

9. Steuergerät nach einem der Ansprüche 1 bis 3,
wobei
der Ausführungsabschnitt (22) zwischen dem Aktivieren und Deaktivieren der Positionsbeziehungsannäherungsoperation auf Grundlage von Zeitinformationen umschaltet.

10. Steuergerät nach einem der Ansprüche 1 bis 3,
wobei
der Ausführungsabschnitt (22) einen Inhalt und/oder einen Modus der Benachrichtigung an den Fahrer in der Benachrichtigungsoperation auf Grundlage von Umgebungsinformationen des Motorrads (1) ändert.

11. Steuergerät nach einem der Ansprüche 1 bis 3,
wobei
der Ausführungsabschnitt (22) einen Inhalt und/oder einen Modus der Benachrichtigung an den Fahrer in der Benachrichtigungsoperation auf Grundlage von Fahrzustandsinformationen des Motorrads (1) ändert.

12. Steuergerät nach einem der Ansprüche 1 bis 3,
wobei
der Ausführungsabschnitt (22) einen Inhalt und/oder einen Modus der Benachrichtigung an den Fahrer in der Benachrichtigungsoperation auf Grundlage von Zeitinformationen ändert.

13. Steuergerät nach einem der Ansprüche 1 bis 3,
wobei
der Ausführungsabschnitt (22) auf Grundlage von Informationen über einen Spurwechsel durch das Motorrad (1) bestimmt, ob die Benachrichtigungsoperation fortgesetzt werden soll.

14. Steuergerät nach einem der Ansprüche 1 bis 3,
wobei
der Ausführungsabschnitt (22) auf Grundlage von Zeitinformationen bestimmt, ob die Benachrichtigungsoperation fortgesetzt werden soll.

15. Steuerungsverfahren zur Steuerung des Verhaltens eines Motorrads (1), wobei das Steuerungsverfahren Folgendes umfasst:
Ausführen einer Positionsbeziehungsanpassungsoperation durch einen Ausführungsabschnitt (22) eines Steuergeräts (20) zum Steuern einer Positionsbeziehung zwischen dem Motorrad (1) und einem vorausfahrenden Fahrzeug (2) des Motorrads (1) auf eine Zielpositionsbeziehung durch automatisches Erzeugen einer Beschleunigung oder Verzögerung des Motorrads (1), wobei
während der Ausführung der Positionsbeziehungsanpassungsoperation, der Ausführungsabschnitt (22) Folgendes ausführt:
eine erste Steueroperation zum Aktivieren und Aussetzen der Ausführung einer Positionsbeziehungsannäherungsoperation, bei der die Positionsbeziehung zwischen dem Motorrad (1) und dem vorausfahrenden Fahrzeug (2) so gesteuert wird, dass sie näher als die Zielpositionsbeziehung ist; und
eine zweite Steueroperation zum Ausführen der Positionsbeziehungsannäherungsoperation, wenn bestimmt wird, dass ein Fahrer des Motorrads (1) beabsichtigt, das vorausfahrende Fahrzeug zu überholen, während die Positionsbeziehungsannäherungsoperation ausgesetzt ist, und
während der Ausführung der Positionsbeziehungsanpassungsoperation, der Ausführungsabschnitt (22) eine Benachrichtigungsoperation zum Benachrichtigen des Fahrers über Informationen über die Positionsbeziehungsannäherungsoperation ausführt,
**dadurch gekennzeichnet, dass**
der Ausführungsabschnitt (22) zwischen dem Aktivieren und Deaktivieren der Positionsbeziehungsannäherungsoperation umschaltet, basierend auf Informationen, die angeben, dass das Motorrad (1) auf einer Fahrbahn fährt, die eine Überholspur aufweist.

## Revendications

1. Contrôleur (20) qui commande le comportement d'une motocyclette (1), le contrôleur comprenant :
une unité d'exécution (22) qui exécute une opération d'ajustement de relation de position afin de commander une relation de position entre la motocyclette (1) et un véhicule précédent (2) de la motocyclette (1) par rapport à une relation de position cible, en générant automatiquement une accélération ou une décélération de la motocyclette (1),
pendant l'exécution de l'opération d'ajustement de relation de position, l'unité d'exécution (22) exécutant :
une première opération de commande destinée à activer et suspendre l'exécution d'une opération d'approche de la relation de position dans laquelle la relation de position entre la motocyclette (1) et le véhicule précédent (2) est commandée de manière à être plus rapprochée que la relation de position cible ; et
une deuxième opération de commande destinée à exécuter l'opération d'approche de la relation de position lorsqu'il est déterminé qu'un conducteur de la motocyclette (1) a l'intention de dépasser le véhicule précédent (2) alors que l'opération d'approche de la relation de position est suspendue, et
pendant l'exécution de l'opération d'ajustement de relation de position, l'unité d'exécution (22) exécutant une opération de notification destinée à notifier au conducteur des informations sur l'opération d'approche de la relation de position, **caractérisé en ce que**
l'unité d'exécution (22) commute entre l'activation et la désactivation de l'opération d'approche de la relation de position sur la base d'informations indiquant que la motocyclette (1) se déplace sur une chaussée qui comporte une voie de dépassement.

2. Contrôleur selon la revendication 1, dans lequel
lors de l'opération de notification, l'unité d'exécution (22) notifie au conducteur au moins soit l'activation, soit la désactivation de l'opération d'approche de la relation de position.

3. Contrôleur selon la revendication 1, dans lequel
lors de l'opération de notification, l'unité d'exécution (22) notifie au conducteur un mode de l'opération d'approche de la relation de position.

4. Contrôleur selon l'une quelconque des revendications 1 à 3, dans lequel
pendant l'exécution de la première opération de commande, l'unité d'exécution (22) exécute l'opération de notification.

5. Contrôleur selon l'une quelconque des revendications 1 à 3, dans lequel
pendant l'exécution de la deuxième opération de commande, l'unité d'exécution (22) exécute l'opération de notification.

6. Contrôleur selon l'une quelconque des revendications 1 à 3, dans lequel
l'unité d'exécution (22) détermine la présence ou l'absence de l'intention sur la base d'informations relatives à l'actionnement d'un clignotant (14) de la motocyclette (1) par le conducteur.

7. Contrôleur selon l'une quelconque des revendications 1 à 3, dans lequel
l'unité d'exécution (22) commute entre l'activation et la désactivation de l'opération d'approche de la relation de position sur la base d'informations d'environnement alentour de la motocyclette (1).

8. Contrôleur selon l'une quelconque des revendications 1 à 3, dans lequel
l'unité d'exécution (22) commute entre l'activation et la désactivation de l'opération d'approche de la relation de position sur la base d'informations d'état de déplacement de la motocyclette (1).

9. Contrôleur selon l'une quelconque des revendications 1 à 3, dans lequel
l'unité d'exécution (22) commute entre l'activation et la désactivation de l'opération d'approche de la relation de position sur la base d'informations temporelles.

10. Contrôleur selon l'une quelconque des revendications 1 à 3, dans lequel
l'unité d'exécution (22) modifie un contenu et/ou un mode de notification au conducteur lors de l'opération de notification sur la base d'informations d'environnement alentour de la motocyclette (1).

11. Contrôleur selon l'une quelconque des revendications 1 à 3, dans lequel
l'unité d'exécution (22) modifie un contenu et/ou un mode de notification au conducteur lors de l'opération de notification sur la base d'informations d'état de déplacement de la motocyclette (1).

12. Contrôleur selon l'une quelconque des revendications 1 à 3, dans lequel
l'unité d'exécution (22) modifie un contenu et/ou un mode de notification au conducteur lors de l'opération de notification sur la base d'informations temporelles.

13. Contrôleur selon l'une quelconque des revendications 1 à 3, dans lequel
l'unité d'exécution (22) détermine s'il convient ou non de poursuivre l'opération de notification sur la base d'informations sur un changement de voie par la motocyclette (1).

14. Contrôleur selon l'une quelconque des revendications 1 à 3, dans lequel
l'unité d'exécution (22) détermine s'il convient ou non de poursuivre l'opération de notification sur la base d'informations temporelles.

15. Procédé de commande destiné à commander le comportement d'une motocyclette (1), le procédé de commande comprenant :
l'exécution, par une unité d'exécution (22) d'un contrôleur (20), d'une opération d'ajustement de relation de position afin de commander une relation de position entre la motocyclette (1) et un véhicule précédent (2) de la motocyclette (1) par rapport à une relation de position cible, par génération automatique d'une accélération ou d'une décélération de la motocyclette (1),
pendant l'exécution de l'opération d'ajustement de relation de position, l'unité d'exécution (22) exécutant :
une première opération de commande destinée à activer et suspendre l'exécution d'une opération d'approche de la relation de position dans laquelle la relation de position entre la motocyclette (1) et le véhicule précédent (2) est commandée de manière à être plus rapprochée que la relation de position cible ; et
une deuxième opération de commande destinée à exécuter l'opération d'approche de la relation de position lorsqu'il est déterminé qu'un conducteur de la motocyclette (1) a l'intention de dépasser le véhicule précédent alors que l'opération d'approche de la relation de position est suspendue, et
pendant l'exécution de l'opération d'ajustement de relation de position, l'unité d'exécution (22) exécutant une opération de notification destinée à notifier au conducteur des informations sur l'opération d'approche de la relation de position, **caractérisé en ce que**
l'unité d'exécution (22) commute entre l'activation et la désactivation de l'opération d'approche de la relation de position sur la base d'informations indiquant que la motocyclette (1) se déplace sur une chaussée qui comporte une voie de dépassement.
